# EUROPÄISCHE PATENTSCHRIFT

(11) **EP 3 189 950 B1**
(45) Veröffentlichungstag und Bekanntmachung des Hinweises auf die Patenterteilung: **04.07.2018**
(21) Anmeldenummer: 16150706.6
(22) Anmeldetag: 11.01.2016
(51) Int. Cl.: B27N 1/00, B27N 3/04, B27N 7/00

(54) **VERFAHREN ZUR HERSTELLUNG EINER HOLZWERKSTOFFPLATTE, INSBESONDERE EINES HOLZ- KUNSTSTOFF-VERBUNDWERKSTOFFS**
METHOD FOR MANUFACTURING A WOODEN PANEL, IN PARTICULAR A WOOD-PLASTIC COMPOSITE
PROCEDE DE FABRICATION D'UN PANNEAU EN BOIS EN PARTICULIER D'UN MATERIAU COMPOSITE PLASTIQUE/BOIS

(43) Veröffentlichungstag der Anmeldung: 12.07.2017
(73) Patentinhaber: Flooring Technologies Ltd., Kalkara SCM1001 (MT)
(72) Erfinder: DR. KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 2 537 653
- EP-A1- 2 808 462
- EP-A1- 2 829 415
- EP-A2- 3 170 636
- WO-A1-2005/009702
- DE-A1- 4 117 184
- DE-A1-102007 025 331
- DE-B3-102012 020 145
- DE-C1- 19 603 330
- US-A- 2 431 720
- US-A- 5 187 000
- US-A1- 2004 028 958
- US-A1- 2007 042 664

## Beschreibung

Die vorliegende Erfindung betrifft ein Verfahren zur Herstellung einer Holzwerkstoffplatte nach Anspruch 1, insbesondere in Form eines Holz-Kunststoff-Verbundwerkstoffs.

### Beschreibung

Neben textilen Bodenbelägen ist die Verwendung von Holzwerkstoffplatten, z.B. in Form von Holzfaserplatten in unterschiedlichen Ausgestaltungen zur Verwendung als Fußbodenlaminat oder zur Verkleidung von Wänden oder auch bei der Herstellung von Möbeln seit langem bekannt. So werden beispielsweise Holzfaserplatten in Form von mitteldichten Holzfaserplatten (MDF-Platten), hochdichten Holzfaserplatten (HDF-Platten), Spanplatten oder OSB-Platten (oriented strand board) verwendet, welche durch Verpressen entsprechender Holzfasern oder Späne mit einem duroplastischen Kunststoffharz als Bindemittel gewonnen werden.

Ein besonderes Problem bei der Verwendung der genannten Holzfaserplatten besteht in der Empfindlichkeit der eingesetzten Holzfasern oder Holzspäne gegenüber hohen Luftfeuchten und direktem Wasserkontakt. Bei Anwendungen von Produkten aus Holz im Außenbereich muss zudem Witterungseinflüssen Rechnung getragen werden. Dabei ist die Verwendung bestimmter Produkte (wie bestimmter Holzsorten oder Holzwerkstoffe) im Außenbereich entweder gar nicht möglich oder es müssen Maßnahmen (wie Versiegelung der Oberfläche, Schutzanstriche usw.) getroffen werden, die die Nutzung teuer und damit unattraktiv machen. Während dieses Problem bei Möbeln oder Produkten für den Innenausbau durch konstruktive oder technologische Maßnahmen relativ leicht beherrscht werden kann, ist dies bei Bodenbelägen z.B. Laminatböden auf der Basis von Holz oder Holzwerkstoffen häufig deutlich problematischer.

Bodenbeläge auf der Basis von Holz oder Holzwerkstoffplatten wie Laminatböden oder Fertigparkett reagieren auf Wasserkontakt schnell mit Quellungen und/oder Dimensionsänderungen, die sich von leichten Kantenquellungen bis hin zu Gefügezerstörungen entwickeln können. Dies wird u.a. durch Einwirkungen von Pflegemitteln auf Wasserbasis hervorgerufen, welche teilweise sehr häufig und sehr intensiv verwendet werden. Auch können hohe Luftfeuchten vergleichbare Prozesse auslösen. Darüber hinaus steht der Bodenbelag typischerweise auch in einem direkten Kontakt mit den Gebäudeteilen wie z.B. Betondecken/Estrich oder Wänden, die ebenfalls Feuchtigkeit in dem Bodenbelag transportieren können. Aus diesem Grund wird bei der Herstellung der oben genannten Holzwerkstoffprodukte auf quellarme Hölzer oder Holzwerkstoffe zurückgegriffen, was zwar die beschriebenen Probleme mindern, aber nicht gänzlich beheben kann. Teilweise kommen auch anorganische Trägerplatten zur Herstellung von Produkten mit Holzoberflächen zum Einsatz, wobei es hier zu Verklebungs-, Bearbeitungs- oder Verlegeproblemen kommen kann.

Die Feuchteschäden sind umso gravierender, je stärker das Holz oder der Holzwerkstoff bei der Herstellung des Produktes verdichtet worden ist. Dadurch wird bei der Beaufschlagung mit Wasser der Quelldruck stark erhöht. Daraus erklärt sich zum Beispiel die deutliche Reaktion von Laminatböden oder lackierten Holzwerkstoffen auf direkte Wasserbeaufschlagung. Eine Vielzahl von Maßnahmen (quellvergütete Platten, Kantenversiegelung usw.) hat zwar bezüglich der Empfindlichkeit gegenüber Wasser/Feuchtigkeit zu Verbesserungen geführt, konnte die Probleme nicht vollständig lösen.

Aus diesen Gründen hat man in der Vergangenheit häufig sogenannte wood-plasticcomposites (WPC) als Trägermaterialien für Holzprodukte verwendet. Diese Trägermaterialien besitzen eine sehr geringe Quellung von weniger als 3% und eine hohe Dimensionsstabilität.

WPC's sind thermoplastisch verarbeitbare Verbundwerkstoffe auf der Basis von Holzmehl oder Holzspänen und thermoplastischen Kunststoffen, welchen ggf. noch weitere Additive zugesetzt werden können. Die Gemische aus Holzfasern und Thermoplasten werden aufgeschmolzen und zu Agglomeraten verarbeitet. Im weiteren Herstellungsprozess werden die Agglomerate in Extrudern aufgeschmolzen und zu relativ kleinformatigen Platten verarbeitet.

Eine andere Möglichkeit zur Herstellung von WPC besteht darin, Granulat, Pulver- oder Fasergemische auf ein Transportband aufzustreuen und in Durchlaufpressen zu verpressen. Dabei wird ebenfalls der Kunststoffanteil des Gemisches aufgeschmolzen, es erfolgt eine Materialverdichtung und durch Abkühlung eine Fixierung des Aufbaus.

Damit die entstehenden WPC-Platten eine möglichst geringe Quellung haben, wird den Gemischen ein Haftvermittler zugesetzt. Bei dem Haftvermittler handelt sich meist um eine Bikomponentenfaser, die mit Maleinsäureanhydrid in der Hülle gegraftet ist. Gegraftet bedeutet dabei, dass durch eine Propfpolymerisation Maleinsäureanhydrid in eine Seitenkette, die auf der Oberfläche des Hüllpolymers verankert ist, einpolymerisiert wurde. Bekannte Bico-Fasern sind dabei PP/PE-Polymere, bei denen auf der PE-Hülle ein Copolymer aus Maleinsäureanhydrid und Styrol verankert ist.

Diese gegraftete Bikomponentenfaser kann als Pulver oder als Faser zu dem Gemisch zugegeben werden. Beim Aufschmelzen und Verdichten des Gemisches (Granulat, Vlies oder Pulver) in einer Doppelbandpresse, reagiert das Anhydrid der Maleinsäure mit OH-Gruppen der Hemicellulosen, der Cellulosen oder des Lignins zu Carbonsäureestern. Damit entstehen chemische Bindungen, die zum einen die Festigkeit des WPC's erhöhen und zum anderen die Quellung stark reduzieren. Übliche Quellwerte für WPC's nach genormten Verfahren bestimmt liegen bei < 1 % (24 h Wasserlagerung).

Der grundsätzliche Nachteil beim Einsatz von Haftvermittlern besteht allerdings darin, dass diese reaktive Anhydridgruppe auch mit anderen reaktiven Gruppen reagieren kann. Dies äußert sich beispielweise im sehr starken Ankleben des WPC's an den Stahlbändern der Doppelbandpresse. Dieses Verkleben lässt sich derzeit nur durch die Verwendung von wässrigen Trennmitteln (JP 2010/280186A) oder den Einsatz von Trennpapieren verhindern. Beides führt zu Kosten und zu technologischen Nachteilen. Beim Einsatz von wässrigen Trennmitteln (die zumindest teilweise in die Platte eindringen) muss die Oberfläche vor der Weiterveredelung entweder geschliffen oder durch eine Oberflächenbehandlung (Corona, Plasma) von dem Trennmittel befreit werden.

Beim Einsatz von Trennpapieren müssen diese zusammen mit dem Gemisch durch die Verdichtungs- und Kühlpresse hindurchgeführt werden, was aufwendige Auf- und Abwickelvorrichtungen erfordert. Die Trennpapiere neigen durch die erhöhte Temperatur zur Versprödung, was häufig zu Abrissen führen kann. Am Ende der Nutzung, die nach ca. zehn Durchläufen erreicht ist, müssen diese Papiere entsorgt werden, was ebenfalls zu erhöhten Kosten führt.

Ein weiteres Problem ist, dass durch den Aufschmelz- und Abkühlprozess in der Doppelbandpresse sich an der Oberfläche ein Film aus geschmolzenem und dann wieder abgekühltem Kunststoff bildet. Zur Veredelung dieser Platte wird dann mit Hilfe eines Hotmelts eine dekorative Kunststofffolie aufgeklebt, eine Finishfolie mit Hilfe eines wasserhaltigen Klebers aufkaschiert oder Imprägnate aufgepresst. Für all diese Verfahren ist es von Vorteil wenn die Oberfläche der Platte einen möglichst hohen Holzanteil hat, da dann die Klebstoffe bzw. Kunstharze sich in der Oberfläche gut verankern können und eine gute Haftung der Beschichtung auf dem Träger sicherstellen.

Entsprechend ergeben sich hieraus die Nachteile von zusätzlichen Kosten für die Bereitstellung und Entsorgung von Trennpapieren und somit einem teuren Herstellungsverfahren.

US20070042664 A1 offenbart die Herstellung eines Faserhaltigen Komposits, wobei das Komposit aus zellulosehaltigen Fasern in Form von Bastfasern, und Bindefasern, besteht. Der vorliegenden Erfindung liegt daher die technische Aufgabe zu Grunde, die beschriebenen Nachteile zu beheben und den Prozess bzw. die nachgeschalteten Veredelungsschritte zu vereinfachen.

Entsprechend wird ein Verfahren zur Herstellung einer Holzwerkstoffplatte gemäß Anspruch 1, insbesondere in Form eines Holz-Kunststoff-Verbundwerkstoffes (WPC), bereitgestellt. Es wird demnach ein mehrstufiger Prozess, insbesondere ein dreistufiger Prozess bereitgestellt, in welchem zunächst aus einem Gemisch von Holzpartikeln in Form von Holzfasern, und Kunststoffen, insbesondere thermoplastischen Kunststoffen, ein Vlies bzw. eine Dämpfstoffmatte mit einer niedrigen Rohdichte hergestellt wird.

Auf dieses vorverdichtete Vlies wird z.B. unter Verwendung einer geeigneten Streuapparatur (z.B. Pulverstreuer), die bevorzugt vor der Doppelbandpresse platziert ist, ein lösemittelfreies Trennmittel (z.B. in Form von nicht-klebenden Fasern oder Pulver) aufgestreut. Bei dem verwendeten Trennmittel handelt es sich somit um eine trockene, streufähige Substanz, die keine Lösemittel wie z.B. Wasser oder organische Flüssigkeiten umfasst. Die Verwendung eines lösemittelfreien Trennmittels verhindert einerseits ein Ankleben des Vlieses an die Bänder der Doppelbandpresse und andererseits wird dem Vlies keine zusätzliche Feuchtigkeit zugeführt, so dass ein zusätzlicher Trocknungsschritt entfällt.

Das mit dem lösemittelfreien Trennmittel bestreute Vlies bzw. Dämpfstoffmatte mit einer niedrigen Rohdichte wird anschließend zunächst auf einer Doppelbandpresse unter hohem Druck und hoher Temperatur verdichtet und anschließend in einer Kühlpresse abgekühlt.

Das vorliegende Verfahren ermöglicht die Herstellung von Holzwerkstoffplatten in Form von Holz-Kunststoff-Kompositen (WPC's) in großen Formaten, die sich zur Weiterverarbeitung z.B. zu Fußbodenlaminate eignen. Insgesamt wird der gesamte Herstellungsprozess vereinfacht, der Entsorgungsaufwand verringert und somit die Kosten reduziert.

In einer Ausführungsform des vorliegenden Verfahrens wird zur Herstellung des Vorvlieses ein thermoplastischer Kunststoff, insbesondere in Form von Granulaten, Pulver oder Kunststofffasern in dem Holzpartikel-Kunststoff-Gemisch verwendet.

Der thermoplastische Kunststoff ist bevorzugter Weise ausgewählt aus einer Gruppe enthaltend Polyethylen (PE), Polypropylen (PP), Polyester, Polyethylenterephthalat (PET), Polyamid (PA), Polystyrol (PS), Acrylnitril-Butadien-Styrol (ABS), Polymethylmethacrylat (PMMA), Polycarbonat (PC), Polyetheretherketon (PEEK), Polyisobutylen (PIB), Polybutylen (PB), Mischungen oder Copolymerisate davon. Insbesondere ist es bevorzugt, wenn als thermoplastischer Kunststoff PE, PP oder eine Mischung davon eingesetzt wird.

Wie oben erwähnt, kann der thermoplastische Kunststoff in Form von Kunststofffasern eingesetzt werden. Die Kunststofffasern können dabei als Monokomponentenfasern oder als Bikomponentenfasern vorliegen. Die thermisch aktivierbaren Kunststoff- bzw. Bindefasern führen in der Matrix aus Holzfasern bzw. Holzpartikel sowohl eine Binde- als auch eine Stützfunktion aus. Werden Monokomponentenfasern verwendet, bestehen diese bevorzugt aus Polyethylen oder anderen thermoplastischen Kunststoffen mit niedrigem Schmelzpunkt.

Bikomponentenfasern (auch als Biko-Stützfasern bezeichnet) werden besonders bevorzugt eingesetzt. Biko-Fasern erhöhen die Steifigkeit von Holzfaserplatten und verringern auch die bei thermoplastischen Kunststoffen (wie z.B. bei PVC) anzutreffende Kriechneigung.

Die Biko-Fasern bestehen typischerweise aus einem Tragfilament oder auch einer Kernfaser aus einem Kunststoff mit höherer Temperaturbeständigkeit, insbesondere Polyester oder Polypropylen, die von einem Kunststoff mit einem niedrigeren Schmelzpunkt, insbesondere aus Polyethylen, umhüllt bzw. ummantelt sind. Die Hülle bzw. der Mantel der Biko-Fasern ermöglicht nach Aufschmelzen bzw. Anschmelzen eine Vernetzung der Holzpartikel miteinander. Vorliegend werden insbesondere als Bikomponentenfasern solche auf der Basis von Thermoplasten wie PP/PE, Polyester/PE oder Polyester/Polyester verwendet.

Es ist ebenfalls vorstellbar, dass der Kunststoffanteil selbst auch ein Gemisch von verschiedenen Kunststoffen ist. So kann ein Kunststoffgemisch aus 20 Gew.% Bikomponentenfasern : 80 Gew% PE-Fasern bis zu 80 Gew.% Bikomponentenfasern : 20 Gew% PE-Fasern bestehen. Generell sind auch andere Zusammensetzungen möglich. Durch die Veränderung der Zusammensetzung der Kunststoffkomponente kann die zur Verdichtung des Vorvlieses bzw. Vlieses benötigte Temperatur verändert und angepasst werden.

Wie oben angeführt, kann vorliegend auch mindestens ein Kunststoff verwendet werden, der mit mindestens einer organischen Verbindung funktionalisiert ist. Die organische Verbindung z.B. in Form eines Monomers, ist wiederum bevorzugt mit mindestens einer funktionellen Gruppe versehen, wobei die funktionelle Gruppe in der Lage ist, mindestens eine Bindung, insbesondere eine chemische Bindung, mit den OH-Gruppen der Zellulose der Holzpartikel einzugehen. Damit entsteht eine chemische Bindung zwischen dem Kunststoff, insbesondere den Kunststofffasern, und den Holzfasern, wodurch eine Trennung zwischen den beiden Fasertypen bei Wasserbeaufschlagung vermieden wird.

Bei der Verbindung handelt es sich um eine organische Verbindung, deren mindestens eine funktionelle Gruppe ausgewählt aus einer Gruppe enthaltend -CO₂H, - CONH2, -COO-, insbesondere Maleinsäure, Phthalsäure, Bernsteinsäure, Glutarsäure, Adipinsäure oder deren Anhydride, oder Succinimid.

Die monomere organische Verbindung wie z.B. Maleinsäureanhydrid (MSA) wird auf das unpolare Basispolymer wie z.B. Polypropylen oder Polyethylen in einem Grafting-Verfahren aufgepfropft. Hierbei ist es auch möglich, dass die organische Verbindung mehr als ein Monomer umfasst, z.B. in Form eines Dimers oder Trimers, wobei z.B. jeweils zwei funktionalisierte organische Moleküle oder Verbindungen über ein Brückenmolekül z.B. in Form ein nicht-funktionalisiertes Molekül miteinander verbunden sind. Besonders bevorzugt ist in diesem Zusammenhang ein Trimer aus MSA-Styren-MSA.
Der Pfropfgrad des verwendeten Kunststoffs kann zwischen 0,1 und 5 Gew% an monomerer organischer Verbindung, bevorzugt zwischen 0,5 und 3 Gew%, insbesondere bevorzugt zwischen 1 und 2 Gew% betragen.
Ganz besonders bevorzugt werden eine Mischung aus Polypropylen und Polyethylen, insbesondere in Form von Bikomponenten-Fasern bestehend aus einem Polypropylen-Kern und einer Polyethylen-Hülle verwendet, wobei die unpolaren Basispolymere jeweils mit Maleinsäureanhydrid funktionalisiert sind. Auch können die Bikomponenten-Fasern aus Polyethylenterephthalat/ Polyethylenterephthalat-Co-iso-phthalat mit ggf. aufgepfropftem MSA bestehen.

Es ist auch möglich eine Mischung aus einem Anteil an nicht-modifizierten (nicht-funktionalisierten) Bikomponentenfasern (d.h. ohne aufgepfropfter organischer Verbindung) und einem Anteil an mit einer organischen Verbindung funktionalisierten Kunststoff (d.h. mit aufgepfropfter organischer Verbindung) zu verwenden. So ist es denkbar, eine Mischung aus einem Anteil an Polyethylenterephthalat/ Polyethylenterephthalat-Co-iso-phthalat-Fasern und mit Maleinsäueranhydrid gegrafteten Polyethylen (z.B. in Form von LLDPE-Fasern) zu verwenden. In solch einem Fall kann z.B. eine Mischung aus nicht-funktionalisierten Kunststofffasern mit einem Anteil von 0,5 bis 10 Gew%, bevorzugt 1 bis 5 Gew% funktionalisierten Kunststofffasern verwendet werden. Erfindungsgemäß wird ein Holzfaser-Kunststoff-Gemisch verwendet, welches ein Mischungsverhältnis von Holzfasern zu Kunststoff (funktionalisiert und/oder nicht-funktionalsiert) zwischen 70 Gew% Holzpartikel : 30 Gew% Kunststoffe und 40 Gew% Holzpartikel : 60 Gew% Kunststoffe umfasst. Das verwendete Holzpartikel-Kunststoffgemisch kann beispielhaft 44 Gew% Holzfasern bzw. Holzpartikel und 56 Gew% Biko-Fasern, z.B. Polyethylenterephthalat/ Polyethylenterephthalat-Co-Isophthalat-Fasern oder PP/PE-Fasern aufweisen. Ein Mischungsverhältnis von Holzfasern und Kunststofffasern von 50 Gew% zu 50 Gew% ist ganz besonders bevorzugt.

Unter den vorliegend verwendeten Holzpartikeln sind lignocellulosehaltige Zerkleinerungsprodukte in Form von Holzfasern zu verstehen. Im Falle der Verwendung von Holzfasern kommen insbesondere trockene Holzfasern mit einer Länge von 1,0 mm bis 20 mm, bevorzugt 1,5 mm bis 10 mm und einer Dicke von 0,05 mm bis 1 mm zum Einsatz. Die Holzfaserfeuchte der verwendeten Fasern liegt dabei erfindungsgemäß in einem Bereich zwischen 6 und 15 %, bevorzugt 6 und 12 % bezogen auf das Gesamtgewicht der Holzfasern. Es ist ebenfalls möglich, die verwendeten Holzpartikel in Bezug auf den mittleren Korndurchmesser zu bestimmen, wobei der mittlere Korndurchmesser d50 zwischen 0,05 mm und 1 mm, bevorzugt 0,1 und 0,8 mm betragen kann.

Entsprechend der gewünschten Zusammensetzung des Holzpartikel-Kunststoff-Gemisches werden die einzelnen Komponenten (Holzpartikel und Kunststoff) in einem Mischer innig vermischt. Das Vermischen der Komponenten kann z.B. durch Eingeben in eine Blasleitung erfolgen. Hier erfolgt auf dem Weg von der Zugabe der Komponenten bis zum Vorratsbehälter eine intensive Vermischung durch die eingeblasene Luft als Transportmittel. Die intensive Vermischung der Komponenten wird im Vorratsbehälter durch die eingeblasene Transportluft noch fortgesetzt.

Aus dem Vorratsbehälter wird das Holzpartikel-Kunststoff-Gemisch, z.B. nach Abwiegen auf einer Flächenwaage, auf ein erstes Transportband über seine Breite gleichmäßig aufgeblasen. Die Menge an zugeführten Holzpartikel-Kunststoff-Gemisch richtet sich nach der gewünschten Schichtdicke und der gewünschten Rohdichte des herzustellenden Vorvlieses. Typische Flächengewichte des gestreuten Vorvlieses können dabei in einem Bereich zwischen 3.000 und 10.000 g/m², bevorzugt zwischen 5.000 bis 7.000 g/m², liegen. Wie bereits erwähnt wird die Breite des gestreuten Vorvlieses durch die Breite des ersten Transportbandes bestimmt, und kann z.B. in einem Bereich bis zu 3.000 mm, bevorzugt 2.800 mm, insbesondere bevorzugt bis zu 2.500 mm liegen.

Nach dem Aufbringen des Holzpartikel-Kunststoff-Gemisches auf ein erstes Transportband unter Ausbildung eines Vorvlieses wird das Vorvlies in mindestens einem ersten Temperofen zum Vorverdichten eingeführt. In einer besonders bevorzugten Ausführungsform des Verfahrens wird das Vorvlies aus Holzpartikeln und Kunststoff in dem mindestens einen Temperofen auf eine Temperatur erhitzt, die der Schmelztemperatur des verwendeten Kunststoffes entspricht oder darüber liegt.

Die Temperaturen im Temperofen können zwischen 150 und 250°C, bevorzugt 160 und 230°C, insbesondere bevorzugt 160 und 200°C liegen. Die Kerntemperatur des Vorvlieses liegt bevorzugt in einem Bereich zwischen 100 und 150°C, insbesondere bevorzugt bei ca. 130°C. Während des Erhitzens im Temperofen erfolgt ein Anschmelzen des Kunststoffmaterials, wodurch eine innige Verbindung zwischen dem Kunststoffmaterial wie z.B. den Kunststofffasern mit den Holzfasern hervorgerufen wird und gleichzeitig eine Verdichtung des Vorvlieses erfolgt.

Die Temperaturen im Temperofen werden beispielsweise durch eingeblasene Heißluft erhalten. Das Vlies wird auf einen Abstand zusammen gefahren und dann von heißer Luft durchströmt, so dass sich Klebepunkte vorrangig zwischen den Kunststofffasern ergeben aber auch zwischen Kunststoff- und Holzfasern.

In einer weiteren Ausführungsform des vorliegenden Verfahrens weist das vorverdichtete Vlies nach Austritt aus dem Temperofen eine Rohdichte (bzw. ein Raumgewicht) zwischen 40 und 200 kg/m³, bevorzugt 60 und 150 kg/m³, insbesondere bevorzugt zwischen 80 und 120 kg/m³ auf. Die Dicke des vorverdichteten Vlieses kann dabei zwischen 20 und 100 mm, bevorzugt 30 und 50 mm, insbesondere bevorzugt 35 und 45 mm liegen.

Es ist insbesondere bevorzugt, wenn der Vorschub des Förderbandes bzw. Transportbandes im Temperofen in einem Bereich zwischen 5 und 15 m/min, bevorzugt zwischen 6 und 12 m/min liegt.

Nach dem Verlassen des Temperofens kann das vorverdichtete Vlies abgekühlt und konfektioniert werden. Typische Konfektionierungsmaßnahmen sind z.B. die Besäumung des Vlieses. Der dabei anfallende Abfall, insbesondere die anfallenden Randstreifen, können zerkleinert werden und in den Verfahrensprozess zurückgeführt werden. Da das gewünschte Mischungsverhältnis gegeben ist, kann das Material direkt in den Vorratsbehälter eingespeist werden.

Wie oben angeführt, wird das Trennmittel auf mindestens eine Oberfläche, bevorzugt auf die Oberseite des vorverdichteten Vlieses mittels Streuen aufgebracht. Es ist aber auch vorstellbar und generell möglich, das Trennmittel auch auf die Unterseite des Vlieses aufzutragen. Zum Auftragen des Trennmittels auf die Unterseite des vorverdichteten Vlieses wird der als Trennmittel verwendete Feststoff auf ein Transportband aufgestreut, dass anschließend an die Unterseite des vorverdichteten Vlieses angedrückt wird. Dies erfolgt unmittelbar nach Verlassen des Temperofens. Durch die Temperatur des vorverdichteten Vlieses sind Teile der Kunststoffe angeschmolzen. An diesen angeschmolzenen Kunststoffen kleben die Trennmittelpartikel und werden zusammen mit dem vorverdichteten Vlies in die Presse transportiert.

Das verwendete Trennmittel liegt bevorzugt als trockener Feststoff vor; d.h. das Trennmittel liegt nicht in Form einer Lösung oder Dispersion vor, und enthält entsprechend kein Wasser oder ein anderes Lösemittel. Insbesondere liegt das mindestens eine Trennmittel in Form eines Pulvers, eines Granulates und/oder Fasern vor.

Das vorliegend zum Einsatz kommende Trennmittel ist bevorzugt ausgewählt aus einer Gruppe enthaltend pflanzliche oder synthetische Feststoffe, insbesondere Holzpartikel, Holzmehl, Holzstaub, Holzfasern, Schleifstaub, Kunststofffasern oder Kunstharzgranulate.

Die Verwendung von Holzmehl, Holzstaub, Holzpartikeln oder Holzfasern als Trennmittel hat den Vorteil, dass dieses Material bei der Herstellung von Holzfasern in einem Refiner ohnehin anfällt. Dieses Material wird üblicherweise aus dem Herstellungsprozess ausgeschleust. Mit dem vorliegenden Verfahren kann dieses holzhaltige Feinmaterial hingegen nach Aufbereitung/Trocknung wieder in den Prozess eingeschleust werden. Damit wird die Materialeffizienz gesteigert und eine Entsorgung des Materials entfällt. Insbesondere im Falle der Verwendung des holzhaltigen Feinmaterials als Trennmittel wird neben der Trennwirkung zwischen der kunststoffhaltigen Matte bzw. Vlies und dem heißen Pressband in der Doppelbandpresse auch eine Matte bzw. Vlies mit einer zusätzlichen Schicht (aus dem Trennmittel) bereitgestellt, die eine direkt veredelbare Oberfläche darstellt (z.B. Auftragen einer Dekorschicht ohne zusätzliche Bearbeitung der Oberfläche). Demnach kann die Trennmittelschicht auch als eine Multifunktionsschicht bezeichnet werden.

Im Falle der Verwendung von Kunststofffasern oder Kunstharzgranulaten als Trennmittel werden Kunststofffasern oder Kunstharzgranulate aus einem nicht-funktionalisierten Kunststoff, insbesondere ausgewählt aus der Gruppe enthaltend Polyethylen (PE), Polypropylen (PP), Polyester, wie Polyethylenterephthalat, oder Mischungen davon, insbesondere von Polypropylen (PP) und Polyethylen (PE), verwendet. Die Kunststofffasern oder Kunstharzgranulate bestehen entsprechend aus einem nicht-klebenden Kunststoff. Die Länge der als Trennmittel verwendeten Kunststofffasern kann zwischen 10 und 150 mm; bevorzugt zwischen 20 und 100 mm, insbesondere bevorzugt zwischen 30 und 70 mm betragen.

In einer Ausführungsform können PET-Bikofasern als Trennmittel verwendet werden. Diese schmelzen zwar auch an, bilden aber in der Presse mit der Stahlband-Oberfläche keine chemische Bindung aus. Nach dem Abkühlen löst sich die Schicht, die sich aus diesen Fasern an der Oberfläche der Platte gebildet hat wieder vom Stahlband ab. Allerdings ist hier dann doch eine Vorbehandlung der Oberfläche der verpressten Werkstoffplatte zur Verbesserung der Verklebung z.B. mit einer Dekorschicht vorteilhaft.

Das mindestens eine Trennmittel wird in einer Menge zwischen 10 und 1000 g/m², bevorzugt zwischen 50 und 500 g/m², insbesondere bevorzugt zwischen 100 und 200 g/m² auf die Oberfläche des vorverdichteten Vlieses aufgestreut.

Nach Aufstreuen des Trennmittels auf das vorverdichtete Vlies wird in einer Ausführungsform des Verfahrens das vorverdichtete und mit dem Trennmittel bestreute Vlies in der mindestens einen Doppelbandpresse bei Temperaturen zwischen 150 und 250°C, bevorzugt 180 und 230°, bevorzugt 200 und 220°C und einem Druck zwischen 2 MPa und 10 MPa, bevorzugt 3 MPa und 8 MPa, insbesondere bevorzugt 5 und 7 MPa verdichtet. Der Vorschub der Doppelbandpresse beträgt zwischen 4 und 15 m/min, bevorzugt zwischen 6 und 12 m/min.

In einer weiteren Variante des vorliegenden Verfahrens wird das vorverdichtete Vlies in der mindestens einen Doppelbandpresse auf eine Dicke zwischen 2 und 20 mm, bevorzugt 3 und 15 mm, insbesondere bevorzugt 4 und 10 mm verdichtet.

Nach Verlassen der mindestens einen Doppelbandpresse wird die verdichtete Holzwerkstoffplatte in mindestens eine Kühlpresse eingeführt, in welcher ein Abkühlen der verdichteten Holzwerkstoffplatte erfindungsgemäß auf Temperaturen zwischen 10 und 70°C, bevorzugt 20 und 40°C erfolgt. Dabei wird in der mindestens einen Kühlpresse ein Druck angewendet, der identisch oder zumindest fast identisch ist zu dem Druck in der Doppelbandpresse, d.h. in der Kühlpresse herrscht ein Druck zwischen 2 MPa und 10 MPa, bevorzugt 3 MPa und 8 MPa, insbesondere bevorzugt 5 und 7 MPa.

Das Einführen der verdichteten Holzwerkstoffplatte in eine Kühlpresse ist notwendig, da die Rückstellkräfte der Fasern so groß sein können, dass die Platte ohne den Schritt des Kühlpressens nach dem Verdichten in der Doppelbandpresse wieder aufgehen würde.

Nach dem Verlassen der Kühlpresse weisen die verdichteten Holzwerkstoffplatten eine Dicke zwischen 2 und 15 mm, bevorzugt 3 und 12 mm, insbesondere bevorzugt 4 und 10 mm auf.

Die Rohdichte der verdichteten Holzwerkstoffplatten nach Verlassen der Kühlpresse liegt in einem Bereich zwischen 500 und 1500 kg/m³, bevorzugt zwischen 650 und 1300 kg/m³, insbesondere bevorzugt zwischen 800 und 1100 kg/m³.

Zur Herstellung einer Holzwerkstoffplatte mit einer Rohdichte von 850 kg/m³ wird z.B. vorteilhafterweise ein Pressdruck in der Doppelbandpresse (und auch Kühlpresse) von 4,5 bis 5 MPa (45-50 bar) bei einer Presstemperatur in der Doppelbandpresse des Vorlaufes von 235°C und einer Presstemperatur auf der Oberfläche der Platte von 220°C angelegt. Im Falle der Herstellung einer Holzwerkstoffplatte mit einer Rohdichte von 950 kg/m³ wird vorteilhafterweise ein Pressdruck in der Doppelbandpresse (und auch Kühlpresse) von 5,5 bis 6 MPa (55-60 bar) bei einer Presstemperatur in der Doppelbandpresse des Vorlaufes von 235°C und einer Presstemperatur auf der Oberfläche der Platte von 220°C angelegt.

In einer besonders bevorzugten Ausführungsform umfasst das vorliegende Verfahren zur Herstellung der Holzwerkstoffplatte die folgenden Schritte:
- Bereitstellen von Holzfasern und Kunststofffasern, insbesondere eines mit mindestens einer organischen Verbindung funktionalisierten Kunststoffes;
- Bilden eines Gemisches aus den Holzfasern und den Kunststofffasern in einer Blasleitung;
- Zwischenpuffern bzw. Zwischenlagern des Gemisches in einem Speiser;
- Aufblasen des Gemisches auf eine erste Walze unter Ausbildung eines ersten Vorvlieses (Airlay);
- Zerfasern des ersten Vorvlieses und nochmaliges Aufblasen des Gemisches auf eine zweite Walze unter Ausbildung eines zweiten Vorvlieses (Airlay);
- Überführen des zweiten Vorvlieses auf ein Transportband und Einführen des zweiten Vorvlieses in den mindestens einen ersten Temperofen zum Vorverdichten durch Thermobonding zu einer Matte bzw. Vlies;
- Aufstreuen eines lösemittelfreien Trennmittels auf die Oberfläche des vorverdichteten Vlieses bzw. Matte;
- Überführen der vorverdichteten Matte bzw. Vlieses in die mindestens eine Doppelbandpresse zum weiteren Verdichten zu einer Trägerplatte, und
- Kühlen der Trägerplatte, insbesondere in einer Kühlzone der mindestens einen Presse.

Das Bereitstellen der Holzfasern und Kunststofffasern erfolgt üblicherweise in Form von Ballen, die in entsprechenden Ballenöffnern geöffnet werden. Nach den jeweiligen Ballenöffnern werden die Fasern in separaten Wiegeeinrichtungen abgewogen und in die Blasleitung eingegeben, in welcher auf dem Weg von der Zugabe der Fasern und ggf. weiteren Komponenten bis zum Vorratsbehälter bzw. Speiser eine intensive Vermischung durch die eingeblasene Luft als Transportmittel erfolgt. Aus dem Vorratsbehälter bzw. Speiser wird das Gemisch aus Holzfasern und Kunststofffasern nach Abwiegen auf einer Flächenwaage auf ein erstes Transportband mit erster Walze über seine Breite gleichmäßig unter Ausbildung eines ersten Vorvlieses aufgeblasen. Das erste Vorvlies läuft am Ende des ersten Transportbandes in eine Zerfaserungsvorrichtung ein. Das zerfaserte Gemisch wird auf ein zweites Transportband mit zweiter Walze unter Ausbildung eines zweiten Vorvlieses aufgeblasen.

Das so erhaltene Vorvlies (hier zweites Vorvlies) wird jetzt in den bereits oben beschriebenen Temperofen zum Vorverdichten unter Ausbildung des vorverdichteten Vlieses bzw. Matte eingeführt, welches anschließend mit dem lösemittelfreien Trennmittel bestreut wird und in die mindestens eine Doppelbandpresse zum weiteren Verdichten zu einer Holzwerkstoffplatte überführt wird.

Die mit dem vorliegenden Verfahren hergestellten Holzwerkstoffplatten bzw. Holz-Kunststoff-Komposite (WPC) sind durch eine Quellung von weniger als 5%, bevorzugt weniger als 3%, insbesondere bevorzugt weniger als 1% gekennzeichnet.

In einer weiteren Ausführungsform des vorliegenden Verfahrens hat es sich als vorteilhaft erwiesen, dem Holzpartikel-Kunststoff-Gemisch vor dem Verdichten weitere Substanzen wie Füllstoffe oder Additive zuzugeben, die der Holzwerkstoffplatte spezielle Eigenschaften verleihen.

Als geeignete Additive können Flammenschutzmittel, lumineszierende oder antibakterielle Stoffe dem Holzpartikel-Kunststoff-Gemisch zugegeben werden. Geeignete Flammschutzmittel können ausgewählt sein aus der Gruppe enthaltend Phosphate, Borate, insbesondere Ammoniumpolyphosphat, Tris(tri-bromneopentyl)phospat, Zinkborat oder Borsäurekomplexe von mehrwertigen Alkoholen.

Weitere Additive können die UV-Beständigkeit, das Alterungsverhalten oder die elektrische Leitfähigkeit der Holzwerkstoffplatte beeinflussen. Zur Erhöhung der UV-Beständigkeit ist es z.B. bekannt, Kunststoffen sogenannte UV-stabilisierende Verbindungen wie die sogenannten HALS-Verbindungen zuzusetzen. Als Antifungizide und antibakterielle Mittel können u.a. Polyimine verwendet werden.

Auch ist es vorteilhaft, dem Holzpartikel-Kunststoff-Gemisch einen anorganischen Füllstoff zuzugeben. Als anorganischer Füllstoff können z.B. Materialien wie Talkum, Kreide, Titandioxid oder andere verwendet werden, die der Platte eine spezifische Färbung verleihen.

In einer weitergehenden Variante des vorliegenden Verfahrens wird mindestens eine Dekorschicht auf mindestens eine Seite, bevorzugt die Oberseite bzw. die sichtbare Seite der verpressten Holzwerkstoffplatte aufgetragen.

Diese mindestens eine Dekorschicht kann wie folgt aufgebaut sein:
- mindestens eine Dekorfolie bestehend aus mindestens einer thermoplastischen Tragschicht, aus mindestens einem auf der Tragschicht aufgedruckten Dekor oder mindestens einer separaten Dekorlage und mindestens einer Kunststoffversiegelung, wobei die Dekorfolie auf die Holzwerkstoffplatte unter Verwendung von mindestens einem Kleber aufkaschiert wird;
- mindestens eine dekorative Finish-Folie, welche aus einem aminoharzgefüllten Dekorpapier und mindestens einer Lackschicht besteht, wobei die dekorative Finish-Folie auf die Holzwerkstoffplatte unter Verwendung von mindestens einem Kleber aufkaschiert wird; oder
- mindestens eine aminoharzimprägnierte Dekorpapierlage und gegebenenfalls mindestens eine aminoharzimprägnierte Overlaypapierlage, wobei die Dekorpapierlage und gegebenenfalls die Overlaypapierlage mit der Holzwerkstoffplatte verpresst werden.

Wie erwähnt, bestehen Dekorfolien typischerweise aus einer oder mehrerer Lagen aus einem thermoplastischen Material als Tragschicht, insbesondere Polyethylen, Polypropylen oder Polyurethan. Das Dekor kann auf diese Tragschicht direkt aufgedruckt werden oder als separate Dekorlage auf der Tragschicht vorgesehen sein. Das Dekor wird wiederum mit einer Kunststoffversiegelung z.B. in Form einer Polypropylen-Folie, Polyurethan-Folie oder in Form eines separaten Lackes (z.B. ESH-Lack) versehen, wobei die Kunststoffversiegelung als Verschleißschutzschicht mit den entsprechenden verschleißhemmenden Partikeln (siehe hierzu auch weiter unten) versehen sein kann. Bei der Dekorfolien handelt es sich somit um ein Lagenpaket aus Tragschicht, Dekor und Versiegelung, die selbst ein fertiges Laminat bzw. einen fertigen Verbund bilden, der als Dekorschicht einsetzbar ist. Eine derartige Dekorfolie kann bevorzugt auf die Holzwerkstoffplatte unter Verwendung von mindestens einem Kleber aufkaschiert werden.

In einer weiteren Ausführungsform kann die Holzwerkstoffplatte eine Dekorschicht in Form einer dekorativen Finish-Folie aufweisen. Eine dekorative Finish-Folie besteht aus einem aminoharzgefüllten dekorativen Papier und mindestens einer darauf vorgesehenen Lackschicht. Das dekorative Papier ist entweder mit dem entsprechenden Aminoharz (z.B. Melamin-Formaldehyd-Harz oder Harnstoff-Formaldehyd-Harz) beleimt oder schwach imprägniert. Die Finish-Folie wird bevorzugt auf die Holzwerkstoffplatte unter Verwendung von mindestens einem Kleber aufkaschiert.

Die dekorative Finish-Folie kann nach dem Aufkaschieren auf die Holzwerkstoffplatte mit mindestens einer weiteren Lackschicht, bevorzugt zwei oder drei Lackschichten, aus einem UV-härtbaren und/oder einem Elektronenstrahlhärtbaren (ESH)-Lack versehen werden. So ist es z.B. möglich, zunächst eine erste Lage eines UV-härtbaren Lackes gefolgt von einer zweiten Lage eines ESH-Lackes und wiederum gefolgt von einer dritten Lage eines ESH-Decklackes aufzutragen. Die einzelnen Lackschichten können jeweils abriebfeste und/oder Nanopartikel enthalten, wobei es insbesondere wünschenswert ist, wenn der UV-Lack verschleißhemmende Partikel (wie z.B. Korund) und der ESH-Decklack Partikel zur Steigerung der Mikrokratzfestigkeit (wie z.B. Silikatnanopartikel aus pyrogener Kieselsäure) umfasst.

Wie erwähnt können die Dekorfolie und die dekorative Finish-Folie als Dekorschicht auf die Holzwerkstoffplatte aufkaschiert werden, z.B. in einer Kaschierpresse. Im Falle einer Kaschierung auf die Holzwerkstoffplatte, insbesondere die Oberseite der Holzwerkstoffplatte, wird zunächst ein geeignetes Bindemittel, wie z.B. ein Polyvinylacetat (PVAc)- Leim, Harnstoffleim oder PU-Hotmelt, auf die Oberseite aufgetragen. Die notwendigen (flüssigen) Klebstoffmengen liegen zwischen 20 und 50 g/m², bevorzugt 30 und 40 g/m². Im Falle der Verwendung von PU-Hotmelt betragen die Auftragsmengen zwischen 50 und 150 g/m², bevorzugt zwischen 70 und 100 g/m². Der Vorschub der Kaschierlinie beträgt zwischen 10 und 50 m/min, bevorzugt 20 und 30 m/min. Aufgrund der in der Kaschierpresse herrschenden hohen Temperaturen erfolgt im Falle der Finish-Folie eine Restaushärtung des Harzimprägnates des dekorativen Papiers der Finish-Folie.

In einer noch weiteren Ausführungsform der vorliegenden Holzwerkstoffplatte kann die mindestens eine Dekorschicht mindestens eine aminoharzimprägnierte Dekorpapierlage und gegebenenfalls mindestens eine aminoharzimprägnierte Overlaypapierlage umfassen, wobei die Dekorpapierlage und gegebenenfalls die Overlaypapierlage mit der Holzwerkstoffplatte z.B. in einer Kurztaktpresse verpresst werden.

In einer weiteren Ausführungsform kann auf die Unterseite der Holz-Kunststoff-Verbundwerkstoff-Platte ein Gegenzug aufgebracht werden. Dadurch werden insbesondere die, durch die auf der Oberseite der Holz-Kunststoff-Verbundwerkstoff-Platte aufgebrachten Dekor- und Overlaylagen wirkenden Zugkräfte ausgeglichen. In einer bevorzugten Ausführungsform wird der Gegenzug als Zelluloselage ausgeführt, die imprägniert ist. Beispielsweise kann der Gegenzug als ein mit einem wärmehärtbaren Kunstharz imprägniertes Papier ausgeführt sein. In einer besonders bevorzugten Ausführungsform entspricht der Schichtaufbau des Gegenzugs dem Schichtaufbau und der jeweiligen Schichtdicke genau der auf der Oberseite aufgebrachten Schichtfolge aus Dekor- und Overlaylagen.

Es ist auch möglich, die Oberseiten der Holzwerkstoffplatten mit einer Prägestruktur zu versehen. Dies erfolgt bevorzugt unmittelbar im Anschluss an das Aufbringen der Dekorschicht auf die Holzwerkstoffplatte.

Gemäß einer weiteren Ausgestaltung kann es auch vorgesehen sein, dass die Holzwerkstoffplatte in Form eines WPC zumindest in einem Randbereich der Platte eine Profilierung aufweist, wobei das Profil beispielsweise die Einbringung eines Nut- und/oder Federprofils in eine Kante bzw. Seitenfläche der Holzwerkstoffplatte ermöglicht, wobei die so erhaltenen Paneele bzw. Holzwerkstoffplatten miteinander verbunden werden können und eine schwimmende Verlegung und Abdeckung eines Bodens ermöglichen.

Mittels des vorliegenden Verfahrens ist es nunmehr möglich eine Holzwerkstoffplatte, insbesondere ein Holz-Kunststoff-Verbundwerkstoff, herzustellen, welche aus einem Holzpartikel-Kunststoff-Gemisch als Werkstoffplatte bzw. Trägerplatte besteht. Auf der Werkstoffplatte ist mindestens eine Schicht aus einem lösemittelfreien Trennmittel, bevorzugt eines holzhaltigen (z.B. Holzstaub- oder Holzfaserhaltigen) Trennmittels, aufgebracht, auf welcher wiederum mindestens eine Dekorschicht, bevorzugt eine Dekorfolie, Finish-Folie oder Dekorpapier mit Overlay, angeordnet ist.

Die vorliegende Holzwerkstoffplatte, insbesondere die mit entsprechenden Dekoren und Verschleißschichten versehenen Holz-Kunststoff-Verbundwerkstoff-Platten, können als Beläge für Wand, Boden oder Decken oder für Möbel eingesetzt werden. Das bevorzugte Anwendungsgebiet ist der Bereich des Bodenbelags und Laminatboden.

Die Erfindung wird nachfolgend an mehreren Ausführungsbeispielen näher erläutert.

### Ausführungsbeispiel 1:

Aus Ballenöffnern wurden Holzfasern (44 Gew%) und BiCo-Fasern (56 Gew%, PET (Polyethylenterephtalat)/ Polyethylen gegraftet (2% MSA)) in eine Mischvorrichtung gefördert. Anschließend wurde aus dem Gemisch der Fasern in einer Streuvorrichtung ein Vlies gebildet (Flächengewicht: 3.100g/m²), dass auf ein Förderband in einer Breite von 2.800 mm abgelegt wurde. Der Vorschub des Förderbands lag bei ca. 6 m/min. Das Vlies wurde in einem Durchströmungsofen bei Temperaturen von bis zu 160°C auf eine Stärke von 35 mm vorverdichtet. Dabei erreichte das Vlies eine Kerntemperatur von ca. 130°C.

Hinter dem Durchströmungsofen befindet sich ein Pulverstreuer mit dem auf die Oberfläche des verdichteten Vlies ca. 80 g Schleifstaub / m² im Durchlauf aufgestreut werden.

Nach dem Durchströmungsofen und Pulverstreuer wird die Matte in einer Doppelbandpresse bei einer Produktionsgeschwindigkeit von 6 m/min auf eine Stärke von 4,0 mm verdichtet. Eine Abrollvorrichtung auf der Unterseite der Doppelbandpresse führt dem vorverdichteten Vlies ein Gegenzugpapier (60 g / m²) zu. Die Öltemperatur im Vorlauf der Doppelbandpresse lag bei 220 °C. Hinter der Doppelbandpresse zur Verdichtung schloss sich eine Kühlpresse mit Wasserkühlung an, in der das WPC auf ca. 15- 40°C abgekühlt wurde. Aus dem Endlosstrang wurden im Anschluss daran Formate geschnitten (2.800 x 1.500 mm). Auf dem oberen Stahlband waren auch nach mehrstündiger Produktion keine Ablagerungen zu beobachten.

Die WPC-Formate wurden nach Abkühlung auf der Oberseite mit einer dekorativen Polypropylenfolie für Fussbodenanwendungen beklebt. Als Kleber wurde ein PU-Hotmelt eingesetzt. Dieser wurde auf der Oberseite in einer Menge von ca. 100 g/m² aufgetragen. Nach dem Abkühlen und Ausreagieren des Hotmelts wurden aus den oben genannten Formaten Fussbodendielen produziert, die an den Seitenflächen mit Verbindungsprofilen nach Art einer Nut und Feder ausgestattet werden. Die so erhaltenen Paneele sind zur Abdeckung eines Bodens geeignet und werden schwimmend verlegt. Bei der Prüfung der Verklebung der Folie auf der Platte war ein Kohäsionsbruch im WPC zu beobachten.

### Ausführungsbeispiel 2:

Aus Ballenöffnern wurden Holzfasern (44 Gew%) und BiCo-Fasern (56 Gew%, Polypropylen/ Polyethylen gegraftet (2% MSA)) in eine Mischvorrichtung gefördert. Anschließend wurde aus dem Gemisch der Fasern in einer Streuvorrichtung ein Vlies gebildet (Flächengewicht: 4.200g/m²), dass auf ein Förderband in einer Breite von 2.800 mm abgelegt wurde. Der Vorschub des Förderbands lag bei ca. 5 m/min. Das Vlies wurde in einem Durchströmungsofen bei Temperaturen von bis zu 160°C auf eine Stärke von 35 mm vorverdichtet. Dabei erreichte das Vlies eine Kerntemperatur von ca. 130°C.

Hinter dem Durchströmungsofen befindet sich ein Streugerät mit dem auf die Oberfläche des verdichteten Vlies ca. 100 g trockene Holzfasern / m² im Durchlauf aufgestreut werden.

Nach dem Durchströmungsofen wird die Matte in einer Doppelbandpresse bei einer Produktionsgeschwindigkeit von 6 m/min auf eine Stärke von 5,2 mm verdichtet. Eine Abrollvorrichtung auf der Unterseite der Doppelbandpresse führt dem vorverdichteten Vlies ein Gegenzugpapier (60 g / m²) zu. Die Öltemperatur im Vorlauf der Doppelbandpresse lag bei 220 °C. Hinter der Doppelbandpresse zur Verdichtung schloss sich eine Kühlpresse mit Wasserkühlung an, in der das WPC auf ca. 15- 40°C abgekühlt wurde. Aus dem Endlosstrang wurden im Anschluss daran Formate geschnitten (2.800 x 1.500 mm). Auf dem oberen Stahlband waren auch nach mehrstündiger Produktion keine Ablagerungen zu beobachten.

Die WPC-Formate wurden nach Abkühlung auf der Oberseite mit einer dekorativen Finishfolie für Fussboden-Anwendungen beklebt. Als Kleber wurde ein PVAC-Kleber mit Härter eingesetzt. Dieser wurde auf der Oberseite in einer Menge von ca. 100 g Kleber fl. /m² (Feststoffgehalt: ca. 50% mit 5 % Härter) aufgetragen. Nach dem Aushärten des Klebers wurden aus den oben genannten Formaten Fussbodendielen produziert, die an den Seitenflächen mit Verbindungsprofilen nach Art einer Nut und Feder ausgestattet werden. Die so erhaltenen Paneele sind zur Abdeckung eines Bodens geeignet und werden schwimmend verlegt. Bei der Prüfung der Verklebung der Folie auf der Platte war ein Kohäsionsbruch im WPC zu beobachten.

### Ausführungsbeispiel 3:

Es wird ein Vlies gemäß Ausführungsbeispiel 2 hergestellt und in einem Durchströmungsofen vorverdichtet.

Hinter dem Durchströmungsofen befindet sich ein Streugerät mit dem auf die Oberseite des verdichteten Vlies ca. 100 g trockene Holzfasern / m² im Durchlauf aufgestreut werden. Zum Auftragen der Holzfasern auf die Unterseite des Vlieses werden ca. 100 trockene Holzfasern / m2 auf das Transportband gestreut.

Nach dem Durchströmungsofen wird die Matte bzw. das Vlies weiter in Analogie zum Ausführungsbeispiel 2 verarbeitet.

## Patentansprüche

1. Verfahren zur Herstellung einer Holzwerkstoffplatte, insbesondere in Form eines Holz-Kunststoff-Verbundwerkstoffes (WPC), umfassend die Schritte:
- Aufbringen eines Gemisches aus Holzfasern mit einer Holzfaserfeuchte zwischen 6 und 15%, bezogen auf das Gesamtgewicht der Holzfasern, und Kunststoff, insbesondere eines mit mindestens einer organischen Verbindung funktionalisierten Kunststoffes, mit einem Mischungsverhältnis zwischen 70 Gew% Holzfasern / 30 Gew% Kunststoff und 40 Gew% Holzfasern / 60 Gew% Kunststoff auf ein erstes Transportband unter Ausbildung eines Vorvlieses und Einführen des Vorvlieses in mindestens einen ersten Temperofen zum Vorverdichten;
- Aufstreuen von mindestens einem lösemittelfreien Trennmittel auf mindestens eine Oberfläche des vorverdichteten Vlieses;
- Überführen des mit dem Trennmittel bestreuten vorverdichteten Vlieses in mindestens eine Doppelbandpresse zum weiteren Verdichten zu einer Holzwerkstoffplatte; und
- Abkühlen der verdichteten Holzwerkstoffplatte in mindestens einer Kühlpresse auf Temperaturen zwischen 10 und 70°C.

2. Verfahren nach Anspruch 1, **dadurch gekennzeichnet, dass** der Kunststoff ein thermoplastischer Kunststoff, insbesondere in Form von thermoplastischen Granulaten oder Kunststofffasern, insbesondere ausgewählt aus der Gruppe enthaltend Polyethylen (PE), Polypropylen (PP), Polyester, wie Polyethylenterephthalat, oder Mischungen davon, insbesondere von Polypropylen (PP) und Polyethylen (PE), ist.

3. Verfahren nach Anspruch 1 oder 2, **dadurch gekennzeichnet, dass** die mindestens eine organische Verbindung mindestens eine funktionelle Gruppe aufweist, wobei die funktionelle Gruppe ausgewählt ist aus einer Gruppe enthaltend - CO₂H, - CONH₂, -COO-, insbesondere Maleinsäure, Phthalsäure, Bernsteinsäure, Glutarsäure, Adipinsäure oder deren Anhydride, Succinimid.

4. Verfahren nach einem der vorhergehenden Ansprüche, **dadurch gekennzeichnet, dass** das Vorvlies aus Holzfasern und Kunststoff in dem mindestens einen Temperofen bei Temperaturen zwischen 150 und 250°C, bevorzugt 160 und 230°C, insbesondere bevorzugt 170 und 200°C vorverdichtet wird.

5. Verfahren nach einem der vorhergehenden Ansprüche, **dadurch gekennzeichnet, dass** das mindestens eine lösemittelfreie Trennmittel als Feststoff vorliegt.

6. Verfahren nach einem der vorhergehenden Ansprüche, **dadurch gekennzeichnet, dass** das mindestens eine Trennmittel in Form eines Pulvers, eines Granulates und/oder als Fasern vorliegt.

7. Verfahren nach einem der vorhergehenden Ansprüche, **dadurch gekennzeichnet, dass** das mindestens eine Trennmittel ausgewählt ist aus einer Gruppe enthaltend pflanzliche oder synthetische Feststoffe, insbesondere Holzpartikel, Holzstaub, Holzmehl, Holzfasern, Schleifstaub, Kunststofffasern oder Kunstharzgranulate.

8. Verfahren nach Anspruch 7, **dadurch gekennzeichnet, dass** die Kunststofffasern oder Kunstharzgranulate aus einem nicht-funktionalisierten Kunststoff, insbesondere ausgewählt aus der Gruppe enthaltend Polyethylen (PE), Polypropylen (PP), Polyester, wie Polyethylenterephthalat, oder Mischungen davon, insbesondere von Polypropylen (PP) und Polyethylen (PE), bestehen.

9. Verfahren nach einem der vorhergehenden Ansprüche, **dadurch gekennzeichnet, dass** das mindestens eine Trennmittel in einer Menge zwischen 10 und 1000 g/m², bevorzugt zwischen 50 und 500 g/m², insbesondere bevorzugt zwischen 100 und 200 g/m² auf die Oberfläche des vorverdichteten Vlieses aufgestreut wird.

10. Verfahren nach einem der vorhergehenden Ansprüche, **dadurch gekennzeichnet, dass** das vorverdichtete und mit dem Trennmittel bestreute Vlies in der mindestens einen Doppelbandpresse bei Temperaturen zwischen 150 und 250°C, bevorzugt 180 und 230°, bevorzugt 200 und 220°C und einem Druck zwischen 2 MPa und 10 MPa, bevorzugt 3 MPa und 8 MPa, insbesondere bevorzugt 5 und 7 MPa verdichtet wird.

11. Verfahren nach einem der vorhergehenden Ansprüche, **dadurch gekennzeichnet, dass** die verdichtete Holzwerkstoffplatte in der mindestens einen Kühlpresse auf Temperaturen zwischen 20 und 40°C abgekühlt wird.

12. Verfahren nach einem der vorhergehenden Ansprüche, **dadurch gekennzeichnet, dass** die verdichtete Holzwerkstoffplatte in der mindestens einen Kühlpresse bei einem Druck abgekühlt wird, der identisch ist zu dem Druck in der Doppelbandpresse.

13. Verfahren nach einem der vorhergehenden Ansprüche, **dadurch gekennzeichnet, dass** mindestens eine Dekorschicht auf mindestens eine Seite der verdichteten Holzwerkstoffplatte aufgetragen wird.

## Claims

1. Process for the production of a wood-composite board, in particular in the form of a wood-plastic-composite material (WPC), comprising the following steps:
- application, onto a first conveyor belt, of a mixture comprising wood fibres with wood-fibre moisture content from 6 to 15%, based on the total weight of the wood fibres, and comprising plastic, in particular a plastic functionalized with at least one organic compound, where the mixing ratio is from 70% by weight of wood fibres / 30% by weight of plastic to 40% by weight of wood fibres / 60% by weight of plastic, with formation of a preliminary web, and introduction of the preliminary web into at least one first heat-conditioning oven for precompaction;
- scattering of at least one solvent-free release agent onto at least one surface of the precompacted web;
- transfer of the precompacted web onto which the release agent has been scattered into at least one twin-belt press for further compaction to give a wood-composite board; and
- cooling of the compacted wood-composite board in at least one cooling press to temperatures of from 10 to 70°C.

2. Process according to Claim 1, **characterized in that** the plastic is a thermoplastic, in particular in the form of thermoplastic granulates or synthetic fibres, in particular selected from the group comprising polyethylene (PE), polypropylene (PP), polyester, for example polyethylene terephthalate, or a mixture thereof, in particular of polypropylene (PP) and polyethylene (PE).

3. Process according to Claim 1 or 2, **characterized in that** the at least one organic compound has at least one functional group, where the functional group is selected from a group comprising -CO₂H, -CONH₂, -COO-, in particular maleic acid, phthalic acid, succinic acid, glutaric acid, adipic acid and anhydrides thereof, and succinimide.

4. Process according to any of the preceding claims, **characterized in that** the preliminary web comprising wood fibres and comprising plastic is precompacted in the at least one heat-conditioning oven at temperatures of from 150 to 250°C, preferably from 160 to 230°C, with particular preference from 170 to 200°C.

5. Process according to any of the preceding claims, **characterized in that** the at least one solvent-free release agent is in solid form.

6. Process according to any of the preceding claims, **characterized in that** the at least one release agent is in the form of a powder, of a granulate and/or of fibres.

7. Process according to any of the preceding claims, **characterized in that** the at least one release agent is selected from a group comprising plant-derived and synthetic solids, in particular wood particles, wood dust, wood flour, wood fibres, grinding dust, synthetic fibres and synthetic resin granulates.

8. Process according to Claim 7, **characterized in that** the synthetic fibres or synthetic resin granulates consist of an unfunctionalized plastic, in particular selected from the group comprising polyethylene (PE), polypropylene (PP), polyester, for example polyethylene terephthalate, and mixtures thereof, in particular of polypropylene (PP) and polyethylene (PE).

9. Process according to any of the preceding claims, **characterized in that** the quantity of the at least one release agent scattered onto the surface of the precompacted web is from 10 to 1000 g/m², preferably from 50 to 500 g/m², with particular preference from 100 to 200 g/m².

10. Process according to any of the preceding claims, **characterized in that** the precompacted web with the release agent scattered thereon is compacted in the at least one twin-belt press at temperatures of from 150 to 250°C, preferably from 180 to 230°, preferably from 200 to 220°C, and at a pressure of from 2 MPa to 10 MPa, preferably from 3 MPa to 8 MPa, with particular preference from 5 to 7 MPa.

11. Process according to any of the preceding claims, **characterized in that** the compacted wood-composite board is cooled in the at least one cooling press to temperatures of from 20 to 40°C.

12. Process according to any of the preceding claims, **characterized in that** the compacted wood-composite board is cooled in the at least one cooling press at a pressure which is the same as the pressure in the twin-belt press.

13. Process according to any of the preceding claims, **characterized in that** at least one decorative layer is applied onto at least one side of the compacted wood-composite board.

## Revendications

1. Procédé servant à fabriquer un panneau en matériau dérivé du bois, en particulier sous la forme d'un matériau composite en bois et en matière synthétique (WPC), comprenant les étapes consistant à :
- appliquer un mélange composé de fibres de bois avec une humidité de fibres de bois entre 6 et 15 %, par rapport au poids total des fibres de bois, et de matière synthétique, en particulier d'une matière synthétique fonctionnalisée avec au moins un composé organique, avec un rapport de mélange compris entre 70 % en poids de fibres de bois / 30 % en poids de matière synthétique et 40 % en poids de fibres de bois / 60 % en poids de matière synthétique sur une première bande transporteuse en réalisant une première couche de fibres et introduire la première couche de fibres dans au moins un premier four de recuit pour le précompactage ;
- disperser au moins un agent de séparation sans solvant sur au moins une surface du non-tissé précompacté ;
- transférer le non-tissé précompacté parsemé de l'agent de séparation dans au moins une presse à double bande afin de poursuivre le compactage en un panneau en matériau dérivé du bois ; et
- refroidir le panneau en matériau dérivé du bois compacté dans au moins une presse de refroidissement à des températures entre 10 et 70 °C.

2. Procédé selon la revendication 1, **caractérisé en ce que** la matière synthétique est une matière synthétique thermoplastique, en particulier sous la forme de granulés thermoplastiques ou de fibres de matière synthétique, en particulier choisie parmi le groupe contenant le polyéthylène (PE), le polypropylène (PP), le polyester, tel que le polytéréphtalate d'éthylène, ou des mélanges de ceux-ci, en particulier de polypropylène (PP) et de polyéthylène (PE).

3. Procédé selon la revendication 1 ou 2, **caractérisé en ce que** l'au moins un composé organique présente au moins un groupe fonctionnel, dans lequel le groupe fonctionnel est choisi parmi un groupe contenant du - CO₂H, du - CONH₂, du -COO-, en particulier de l'acide maléique, de l'acide phtalique, de l'acide succinique, de l'acide glutarique, de l'acide adipique ou ses anhydrides, du succinimide.

4. Procédé selon l'une quelconque des revendications précédentes, **caractérisé en ce que** la première couche de fibres composée de fibres de bois et de matière synthétique est précompactée dans l'au moins un four de recuit à des températures entre 150 et 250 °C, de manière préférée 160 et 230 °C, en particulier de manière préférée 170 et 200 °C.

5. Procédé selon l'une quelconque des revendications précédentes, **caractérisé en ce que** l'au moins un agent de séparation sans solvant est présent sous la forme d'un solide.

6. Procédé selon l'une quelconque des revendications précédentes, **caractérisé en ce que** l'au moins un agent de séparation est présent sous la forme d'une poudre, de granulés et/ou de fibres.

7. Procédé selon l'une quelconque des revendications précédentes, **caractérisé en ce que** l'au moins un agent de séparation est choisi parmi un groupe contenant des solides végétaux ou synthétiques, en particulier des particules de bois, de la poussière de bois, de la sciure de bois, des fibres de bois, de la poussière de meulage, des fibres de matière synthétique ou des granulés de résine synthétique.

8. Procédé selon la revendication 7, **caractérisé en ce que** les fibres de matière synthétique ou les granulés de résine synthétique sont constitués d'une matière synthétique non fonctionnalisée, en particulier choisie parmi le groupe contenant le polyéthylène (PE), le polypropylène (PP), le polyester, tel que le polytéréphtalate d'éthylène, ou des mélanges de ceux-ci, en particulier de polypropylène (PP) et de polyéthylène (PE).

9. Procédé selon l'une quelconque des revendications précédentes, **caractérisé en ce que** l'au moins un agent de séparation est dispersé en une quantité entre 10 et 1000 g/m², de manière préférée entre 50 et 500 g/m², en particulier de manière préférée entre 100 et 200 g/m² sur la surface du non-tissé précompacté.

10. Procédé selon l'une quelconque des revendications précédentes, **caractérisé en ce que** le non-tissé précompacté et parsemé de l'agent de séparation est compacté dans l'au moins une presse à double bande à des températures entre 150 et 250 °C, de manière préférée 180 et 230°, de manière préférée 200 et 220 °C, et à une pression entre 2 MPa et 10 MPa, de manière préférée 3 MPa et 8 MPa, en particulier de manière préférée 5 et 7 MPa.

11. Procédé selon l'une quelconque des revendications précédentes, **caractérisé en ce que** le panneau en matériau dérivé du bois compacté est refroidi dans l'au moins une presse de refroidissement à des températures entre 20 et 40 °C.

12. Procédé selon l'une quelconque des revendications précédentes, **caractérisé en ce que** le panneau en matériau dérivé du bois compacté est refroidi dans l'au moins une presse de refroidissement à une pression qui est identique à la pression dans la presse à double bande.

13. Procédé selon l'une quelconque des revendications précédentes, **caractérisé en ce qu'**au moins une couche décorative est appliquée sur au moins un côté du panneau en matériau dérivé du bois compacté.
